# EUROPÄISCHE PATENTSCHRIFT

(11) **EP 2 868 818 B1**
(45) Veröffentlichungstag und Bekanntmachung des Hinweises auf die Patenterteilung: **19.09.2018**
(21) Anmeldenummer: 14190834.3
(22) Anmeldetag: 29.10.2014
(51) Int. Cl.: E03C 1/186, E03C 1/18, A47J 47/20

(54) **Spültischanordnung**
Sink assembly
Système d'évier

(30) Priorität: 31.10.2013 DE 202013104890 U
(43) Veröffentlichungstag der Anmeldung: 06.05.2015
(73) Patentinhaber: Naber Holding GmbH & Co. KG, 48529 Nordhorn (DE)
(72) Erfinder: Naber, Hans-Joachim, 48527 Nordhorn (DE); Keller, Lisa, 07747 Jena (DE)
(74) Vertreter: Angerhausen, Christoph

(56) Entgegenhaltungen:
- EP-A2- 1 566 494
- EP-A2- 1 598 488
- WO-A1-2009/095738
- DE-A1-102005 010 907
- FR-A- 990 131
- US-A- 2 907 052
- US-A- 4 336 620
- US-A1- 2011 314 599

## Beschreibung

Die Erfindung betrifft eine Spültischanordnung, die einen Spültisch und mindestens einen Spültischaufsatz aufweist, wobei der Spültisch eine Ablaufschräge aufweist, die sich unter einem spitzen Winkel zur Horizontalen erstreckt und an deren unterer Berandung ein Wasserablauf ausgebildet ist, wobei sich ein in den Wasserablauf mündender Ablaufkanal entlang der unteren Berandung erstreckt, wobei der Spültischaufsatz ein Gefäß ist, beispielsweise ein Spülbecken, mit einer oberen Berandung, welche ein umlaufender Rand um eine Öffnung des Gefäßes ist. Eine derartige Spültischanordnung ist aus der EP 1 566 494 A2 bekannt. Ähnliche Anordnungen beschreiben die US 2011/0314599 A1, die US 4,336,620 A, die DE 10 2005 010 907 A1, die US 2,907,052 A, die FR 990 131 A, die WO 2009/095738 A1 und die EP 1 598 488 A2.

Die aus EP 1 566 494 A2 bekannte Spültischanordnung verwendet als Spültischaufsatz jedoch eine Schüssel ohne Ablauf, so dass Wasser aus dem Aufsatz nur durch aufwendiges Kippen des Gefäßes entleert werden kann.

Ausgehend davon ist es Aufgabe der Erfindung, das Entleeren des Gefäßes zu vereinfachen.

Diese Aufgabe wird erfindungsgemäß durch eine Spültischanordnung mit den Merkmalen des Anspruchs 1 gelöst. Die abhängigen Ansprüche betreffen jeweils vorteilhafte Ausführungsformen der Erfindung.

Die erfindungsgemäße Spültischanordnung zeichnet sich dadurch aus, dass der Spültischaufsatz einen Ablauf aufweist, der sich durch die Aufstandsfläche hindurch erstreckt, so dass der Ablauf verschlossen ist, wenn der Spültischaufsatz auf der Ablaufschräge aufgesetzt ist.

Der Grundgedanke der erfindungsgemäßen Spültischanordnung beruht somit darauf, anstelle eines Spülbeckens mit gegebenen Abmessungen einen Spültisch mit einer Ablaufschräge beliebiger Größe bereitzustellen, auf der je nach Bedarf und Anwendungsfall ein individueller Spültischaufsatz aufgesetzt werden kann. Dies ermöglicht, dass die Ablaufschräge in der Art einer gegenüber der horizontalen leicht angeschrägten Arbeitsplatte ausgebildet werden kann. Neben dem Abführen von Wasser kann die Ablaufschräge somit beispielsweise auch als Arbeitsfläche für die Zubereitung eines Teiges dienen. In diesem Fall kann der als separates Bauteil ausgebildete Spültischaufsatz von der Ablaufschräge entfernt werden, so dass auf der Ablaufschräge eine großzügige Arbeitsfläche bereitgestellt wird.

Wird der Spültischaufsatz mit seiner unter demselben Winkel wie die Ablaufschräge angewinkelten Aufstandsfläche auf der Ablaufschräge aufgesetzt, kann dies je nach Ausrichtung des Spültischaufsatzes auf der Ablaufschräge gerade derart erfolgen, dass die obere Berandung des Spültischaufsatzes horizontal ausgerichtet ist und damit das komfortable Arbeiten ermöglicht wird.

Besonders bevorzugt weist die erfindungsgemäße Spültischanordnung eine Mehrzahl der Spültischaufsätze mit unterschiedlichen Abmessungen auf. Neben den Abmessungen können sich die Spültischaufsätze auch in einer weiteren Funktionalität unterscheiden. So ist es beispielsweise möglich, dass ein weiterer Spültischaufsatz zusätzlich zum Spültischaufsatz mit Ablauf vorgesehen wird, der als eine Schüssel ausgebildet ist. Eine solche Schüssel wäre dann aufgrund der erfindungsgemäßen Gestaltung der Spültischanordnung nicht ortsgebunden, so dass unter Verwendung der Schüssel durchgeführte Arbeiten auch räumlich getrennt von dem Spültisch durchgeführt werden können.

Bei einer anderen Ausführungsform ist vorgesehen, dass sich um eine Breite des Ablaufkanals parallel beabstandet zu der unteren Berandung ein Sockel erstreckt, dessen Oberseite oberhalb der unteren Berandung angeordnet ist. Ein derartiger Sockel kann beispielsweise ein Standsockel für die Montage einer Ein- oder Mehrlocharmatur sein. In Verbindung mit erfindungsgemäßen Spültischanordnungen hat sich insbesondere die Verwendung von Armaturen mit flexiblem Schwanenhals als vorteilhaft herausgestellt.

Gemäß einer anderen Ausführungsform weist die Spültischanordnung weiterhin ein Abtropfgitter auf, das an gegenüber liegenden Enden auf die Oberseite des Sockels und auf der Ablaufschräge aufgesetzt ist und sich von dem Sockel über den Ablaufkanal und Teile der Ablaufschräge hinweg erstreckt, wobei Sprossen des Abtropfgitters beabstandet zu der Ablaufschräge angeordnet sind. Mit Hilfe eines derartigen Abtropfgitters ist es beispielsweise möglich, Teller zwischen den Sprossen derart anzuordnen, dass sie auf der Ablaufschräge aufstehend zum Abtropfen zwischen den Sprossen gehaltern sind.

Die Spültischanordnung kann des weiteren ein Schneidbrett aufweisen, das keilförmig ausgebildet ist, oder das an seiner Unterseite einen Standfuß, beispielsweise einen Steg, aufweist, so dass es, wenn es auf der Ablaufschräge aufgesetzt ist, eine horizontale Arbeitsfläche bildet, die mit der Oberseite des Sockels fluchtet.

Dabei kann gemäß einer Ausführungsform das Auflagebrett weiterhin derart bemessen sein, dass, wenn es mit seiner Hinterkante an dem Sockel anliegt, eine der Hinterkante gegenüber angeordnete Vorderkante des Auflagebretts mit einer vorderen Berandung des Spültischs fluchtet.

Bei noch einer anderen Ausführungsform der Erfindung ist vorgesehen, dass die Ablaufschräge, der Ablaufkanal mit Wasserablauf, der Sockel und sich senkrecht zu dem Sockel erstreckende Seitenwände der Ablaufschräge einstückig ausgebildet sind, beispielsweise aus einem Steinmaterial oder einem Material mit Steinoptik.

Schließlich ist erfindungsgemäß auch eine Ausführungsform vorgesehen, bei der der Spültisch weiterhin ein Rahmengestell aufweist, wobei die einstückig ausgebildeten Elemente (Ablaufschräge, Ablaufkanal mit Wasserablauf, Sockel und Seitenwände) einen Spültischmodulaufsatz bilden, der in einen umlaufenden, horizontalen Rahmen, der eine Auflagefläche für den Spültischmodulaufsatz bildet, eingesetzt ist.

Weitere Einzelheiten der Erfindung werden anhand der nachstehenden Figuren erläutert. Dabei zeigt
- Figur 1: eine Draufsicht auf einen Spültisch, der für die erfindungsgemäße Spültischanordnung verwendet werden kann;
- Figur 2: eine Seitenansicht des Spültischs gemäß Figur 1;
- Figur 3: zwei mögliche Varianten von auf einem Spültisch aufgesetzten Spültischaufsätzen; und
- Figur 4: eine weitere Verwendung des Spültischs, bei der ein Auflagebrett auf die Ablaufschräge aufgesetzt ist.

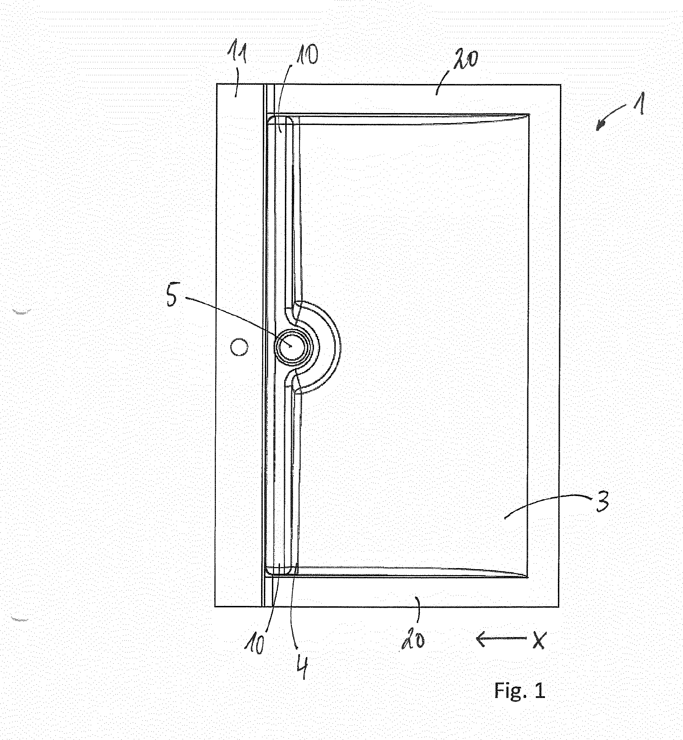

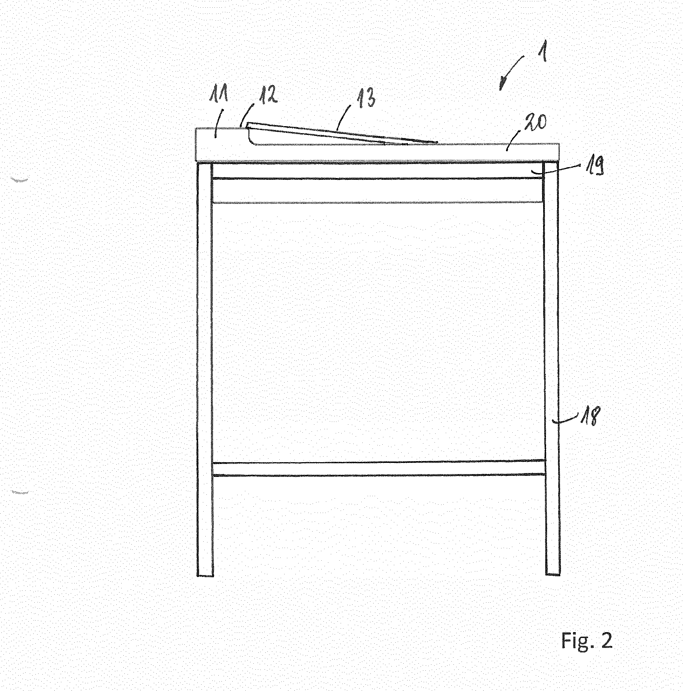

Die Draufsicht auf einen Spültisch 1 gemäß Figur 1 zeigt die in Richtung X abfallende Ablaufschräge 3, welche von Seitenwänden 20 begrenzt ist. An ihrer unteren Berandung 4 geht die Ablaufschräge 3 in den Ablaufkanal 10 bzw. den Wasserablauf 5 über. Der Ablaufkanal 10 grenzt einerseits an die Ablaufschräge 3 und gegenüberliegend an den Sockel 11. Wie in Figur 2 zu erkennen ist, weist der Sockel 11 eine Oberseite 12 auf, die höher als die Seitenwände und damit höher als die Ablaufschräge 4 angeordnet ist. An ihrer der unteren Berandung 4 gegenüberliegenden Berandung geht die Ablaufschräge 3 fließend in eine vordere Berandung des Spültischs über, so dass im vorderen Bereich des Spültischs keine ausgeprägte Kante am Übergang von der Spültischberandung zu der Ablaufschräge 3 ausgebildet ist.

Wie in Figur 2 zu erkennen ist, kann die höher gelegene Oberseite 12 des Sockels 11 dazu dienen, um ein Tropfgitter 13 derart abzustützen, dass sich Sprossen dieses unter einem Abstand zu der Ablaufschräge 3 erstrecken. Dies ermöglicht, dass zwischen den Sprossen beispielsweise Teller auf der Ablaufschräge 3 aufstehend gehalten werden. Die Zusammenschau der Figuren 1 und 2 zeigt, dass die Ablaufschräge 3, der Ablaufkanal 10 mit dem Wasserablauf 5, der Sockel 11 und die sich senkrecht zu dem Sockel 11 erstreckenden Seitenwände 20 einstückig ausgebildet sind und einen Spültischmodulaufsatz bilden. Dieser Spültischmodulaufsatz ist von einem Rahmengestell 18 auf Arbeitshöhe gehalten, wozu der Spültischmodulaufsatz in einen umlaufenden, horizontalen Rahmen 19, der eine Auflagefläche für den Spültischmodulaufsatz bildet, eingesetzt ist.

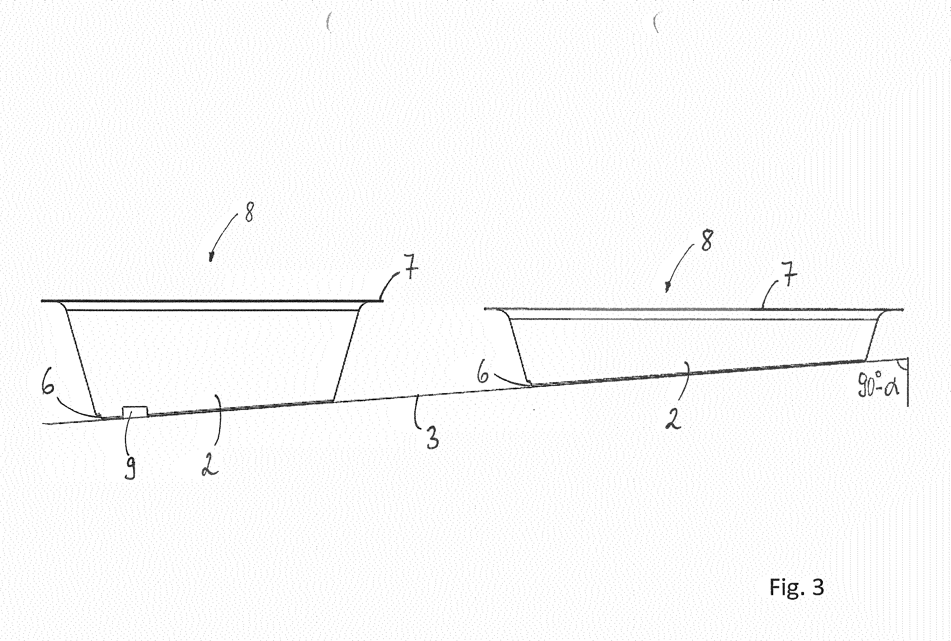

Die Figur 3 zeigt zwei mögliche Varianten für Spültischaufsätze 2. Diese zeichnen sich erfindungsgemäß gerade dadurch aus, dass sie eine Aufstandsfläche 6 aufweisen, die sich unter dem spitzen Winkel α, unter dem sich auch die Ablaufschräge erstreckt, zu einer oberen Berandung 7 des Spültischaufsatzes erstreckt. Dies ermöglicht, dass die Spültischaufsätze 2 gerade derart auf die Ablaufschräge 3 aufgesetzt werden können, dass eine obere Berandung 7 dieser horizontal ausgerichtet ist.

Die in der Darstellung gemäß Figur 3 linke Ausführungsform eines Spültischaufsatzes 2 weist einen Ablauf 9 auf, der sich durch die Aufstandsfläche 6 hindurch erstreckt. Ist dieser Spültischaufsatz 2 somit auf die ebene Ablaufschräge 3 aufgesetzt, wird durch die Ablaufschräge 3 gerade der Ablauf 9 verschlossen, so dass in den Spültischaufsatz 2 gefülltes Wasser nicht abfließen kann. Erst wenn der Spültischaufsatz 2 angehoben wird, wird der Ablauf 9 freigegeben, so dass in dem Spültischaufsatz 2 gehaltenes Wasser über den Ablauf 9 entlang der Ablaufschräge 3 in den Wasserablauf 5 des Spültischs 1 ablaufen kann.

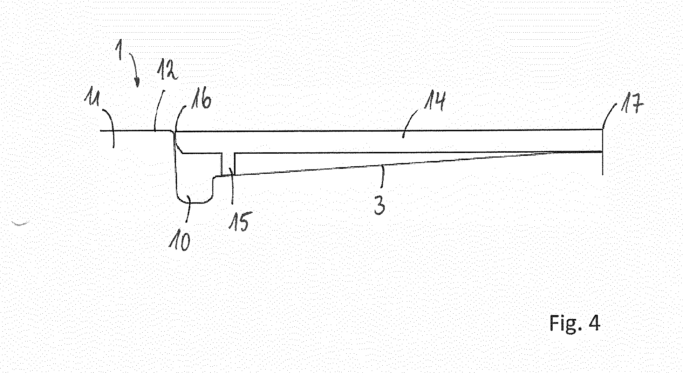

Die Figur 4 zeigt einen Ausschnitt eines Spültischs 1, bei dem auf die Ablaufschräge 3 ein Auflagebrett aufgesetzt ist, welches an seiner Unterseite einen Steg 15 aufweist. Die Dicke des Schneidbretts und die Höhe des Steges 15 sind gerade derart abgestimmt, dass bei auf der Ablaufschräge 3 aufgesetztem Auflagebrett 14 das Auflagebrett 14 gerade eine horizontale Arbeitsfläche bereitstellt, wobei diese Arbeitsfläche mit der Oberseite 12 des Sockels 11 fluchtet. Weiterhin ist das Auflagebrett 14 derart bemessen, dass seine Vorderkante 17 mit einer vorderen Berandung des Spültischs 2 fluchtet, wenn das Auflagebrett mit seiner Hinterkante 16 an dem Sockel 11 anliegt.

## Patentansprüche

1. Spültischanordnung, die einen Spültisch (1) und mindestens einen Spültischaufsatz (2) aufweist, wobei der Spültisch (1) eine Ablaufschräge (3) aufweist, die sich unter einem spitzen Winkel (α) zur Horizontalen erstreckt und an deren unterer Berandung (4) ein Wasserablauf (5) ausgebildet ist, wobei sich ein in den Wasserablauf (5) mündender Ablaufkanal (10) entlang der unteren Berandung (4) erstreckt, wobei der Spültischaufsatz (2) ein Gefäß ist, beispielsweise ein Spülbecken, mit einer ebenen Aufstandsfläche (6) und einer oberen Berandung (7), welche ein umlaufender Rand um eine Öffnung (8) des Gefäßes ist, **dadurch gekennzeichnet, dass** die Ablaufschräge (3) von einer ebenen Fläche gebildet ist, die sich unter dem selben spitzen Winkel (α) zu der oberen Berandung (7) des Spültischaufsatzes (2) erstreckt, und der Spültischaufsatz (2) einen Ablauf (9) aufweist, wobei sich der Ablauf (9) durch die Aufstandsfläche (6) hindurch erstreckt, so dass der Ablauf (9) verschlossen ist, wenn der Spültischaufsatz (2) auf der Ablaufschräge (3) aufgesetzt ist.

2. Spültischanordnung nach Anspruch 1, die eine Mehrzahl der Spültischaufsätze (2) mit unterschiedlichen Abmessungen aufweist.

3. Spültischanordnung nach Anspruch 1, bei der sich um eine Breite des Ablaufkanals (10) parallel beabstandet zu der unteren Berandung (4) ein Sockel (11) erstreckt, dessen Oberseite (12) oberhalb der unteren Berandung (4) angeordnet ist.

4. Spültischanordnung nach Anspruch 3, bei der der Sockel (11) ein Standsockel für die Montage einer Ein- oder Mehrlocharmatur ist.

5. Spültischanordnung nach Anspruch 3 oder 4, die weiterhin ein Abtropfgitter (13) aufweist, das an gegenüber liegenden Enden auf die Oberseite (12) des Sockels (11) und auf der Ablaufschräge (3) aufgesetzt ist und sich von dem Sockel (11) über den Ablaufkanal (10) und Teile der Ablaufschräge (3) hinweg erstreckt, wobei Sprossen des Abtropfgitters beabstandet zu der Ablaufschräge (3) angeordnet sind.

6. Spültischanordnung nach einem der Ansprüche 3 bis 5, die weiterhin ein Auflagebrett (14), beispielsweise ein Schneidbrett, aufweist, das keilförmig ausgebildet ist, oder das an seiner Unterseite einen Standfuß (15), beispielsweise einen Steg, aufweist, so dass es, wenn es auf der Ablaufschräge (3) aufgesetzt ist, eine horizontale Arbeitsfläche bildet, die mit der Oberseite (12) des Sockels (11) fluchtet.

7. Spültischanordnung nach Anspruch 6, bei der das Auflagebrett (14) weiterhin derart bemessen ist, dass, wenn es mit seiner Hinterkante (16) an dem Sockel (11) anliegt, eine der Hinterkante (16) gegenüber angeordnete Vorderkante (17) des Auflagebretts (14) mit einer vorderen Berandung des Spültischs (2) fluchtet.

8. Spültischanordnung nach einem der Ansprüche 3 bis 7, bei der die Ablaufschräge (3), der Ablaufkanal (10) mit Wasserablauf (5), der Sockel (11) und sich senkrecht zu dem Sockel (11) erstreckende Seitenwände (20) der Ablaufschräge (3) einstückig ausgebildet sind, beispielsweise aus einem Steinmaterial oder einem Material mit Steinoptik.

9. Spültischanordnung nach Anspruch 8, bei der der Spültisch (1) weiterhin ein Rahmengestell (18) aufweist, wobei die einstückig ausgebildeten Elemente (3, 5, 10, 11, 20) einen Spültischmodulaufsatz bilden, der in einen umlaufenden, horizontalen Rahmen (19), der eine Auflagefläche für den Spültischmodulaufsatz bildet, eingesetzt ist.

## Claims

1. Sink unit arrangement comprising a sink unit (1) and at least one sink unit top (2), wherein the sink unit (1) has a discharge slope (3) extending at an acute angle (a) to the horizontal and at the lower edge (4) of which a water drain (5) is formed, a discharge channel (10) opening into the water drain extending along the lower edge (4), wherein the sink unit top (2) is a vessel, for example a sink, having a planar contact surface (6) and an upper edge (7) which is a peripheral edge around an opening (8) of the vessel, **characterized in that** the discharge slope (3) is formed by a planar surface extending at the same acute angle (a) to the upper edge (7) of the sink unit top (2), and the sink unit top (2) has a drain (9), the drain (9) extending through the contact surface (6), so that the drain (9) is closed when the sink unit top (2) is placed on the discharge slope (3).

2. The sink unit arrangement according to claim 1, comprising a plurality of sink unit tops (2) of different sizes.

3. The sink unit arrangement according to claim 1, in which a base (11) extends parallel displaced from the lower edge (4) by a width of the discharge channel (10), the upper side (12) of the base (11) being arranged above the lower edge (4).

4. The sink unit arrangement according to claim 3, in which the base (11) is a pedestal for mounting a single-hole or multi-hole valve.

5. The sink unit arrangement according to claim 3 or 4, further comprising a drip grid (13) mounted at opposite ends on the upper side (12) of the base (11) and on the discharge slope (3) and extending from the base (11) across the discharge channel (10) and parts of the discharge slope (3), wherein bars of the drip grid are spaced apart from the discharge slope (3).

6. The sink arrangement according to one of claims 3 to 5, which further comprises a board (14), for example a cutting board, which is wedge-shaped, or which has a stand (15), for example a web, on its underside, so that, when it is placed on the discharge slope (3), it forms a horizontal working surface which is aligned with the upper side (12) of the base (11).

7. The sink unit arrangement according to claim 6, in which the board (14) is further dimensioned such that, when its rear edge (16) bears against the base (11), a front edge (17) of the board (14) opposite the rear edge (16) is aligned with a front edge of the sink unit (1).

8. The Sink unit arrangement according to one of claims 3 to 7, in which the discharge slope (3), the discharge channel (10) with water drain (5), the base (11) and side walls (20) of the discharge slope (3) which extend perpendicularly to the base (11) are formed in one piece, for example from a stone material or a material with a stone appearance.

9. The sink unit arrangement according to claim 8, in which the sink unit (1) further comprises a frame (18), the one-piece elements (3, 5, 10, 11, 20) forming a sink unit module attachment inserted into a peripheral horizontal frame (19) forming a support surface for the sink unit module attachment.

## Revendications

1. Dispositif d'évier qui comprend un évier (1) et au moins une partie supérieure d'évier (2), l'évier (1) comprenant un plan incliné d'évacuation (3) qui s'étend avec un angle aigu (α) par rapport à l'horizontale et sur la bordure inférieure (4) duquel est réalisé une évacuation d'eau (5), un canal d'évacuation (10) débouchant dans l'évacuation d'eau (5) s'étendant le long de la bordure inférieure (4), la partie supérieure d'évier (2) étant un récipient, par exemple un bac, avec une surface de support plane (6) et une bordure supérieure (7) qui est un bord circulaire autour d'une ouverture (8) du récipient, **caractérisé en ce que** le plan incliné d'évacuation (3) est constitué d'une surface plane qui s'étend avec le même angle aigu (α) par rapport à la bordure supérieure (7) du partie supérieure d'évier (2), et la partie supérieure d'évier (2) comprend une évacuation (9), l'évacuation (9) s'étendant à travers la surface de support (6) de façon à ce que l'évacuation (9) soit fermée lorsque la partie supérieure d'évier (2) est posé sur le plan incliné d'évacuation (3).

2. Dispositif d'évier selon la revendication 1, qui comprend une pluralité de parties supérieures d'évier (2) avec différentes dimensions.

3. Dispositif d'évier selon la revendication 1, dans lequel, écarté d'une largeur du canal d'évacuation (10) et parallèlement à la bordure inférieure (4), s'étend un socle (11) dont le côté supérieur (12) se trouve au-dessus de la bordure inférieure (4).

4. Dispositif d'évier selon la revendication 3, dans lequel le socle (11) est un socle de support pour le montage d'une robinetterie simple ou multiple.

5. Dispositif d'évier selon la revendication 3 ou 4, qui comprend en outre une grille d'égouttage (13) qui est posée sur des extrémités opposées sur le côté supérieur (12) du socle (11) et sur le plan incliné d'évacuation (3) et qui s'étend du socle (11) au-dessus du canal d'évacuation (10) et des parties du plan incliné d'évacuation (3), des barreaux de la grille d'égouttage étant disposées à une certaine distance du plan incliné d'évacuation (3).

6. Dispositif d'évier selon l'une des revendications 3 à 5, qui comprend en outre une planche d'appui (14), par exemple une planche découpée, qui présente la forme d'un coin, ou qui comprend, sur son côté inférieur, un pied de support (15), par exemple une nervure, de façon à ce que, lorsqu'elle est posée sur le plan incliné d'évacuation (3), elle forme une surface de travail horizontale qui est alignée avec le côté supérieur (12) du socle (11).

7. Dispositif d'évier selon la revendication 6, dans lequel la planche d'appui (14) est en outre dimensionnée de façon à ce que, lorsqu'elle s'appuie, avec son arête arrière (16), contre le socle (11), une arête avant (17), disposée en face de l'arête arrière (16), de la planche d'appui (14), soit alignée avec une bordure avant de l'évier (2).

8. Dispositif d'évier selon l'une des revendications 3 à 7, dans lequel le plan incliné d'évacuation (3), le canal d'évacuation (10) avec évacuation d'eau (5), le socle (11) et des parois latérales (20) du plan incliné d'évacuation (3), s'étendant perpendiculairement par rapport au socle (11), sont conçus d'une seule pièce, par exemple avec un matériau de type pierre ou un matériau ayant l'aspect de la pierre.

9. Dispositif d'évier selon la revendication 8, dans lequel l'évier (1) comprend en outre un châssis (18), les éléments constitués d'une seule pièce (3, 5, 10, 11, 20) formant une partie supérieure modulaire d'évier qui est insérée dans un cadre circulaire horizontal (19) qui forme une surface d'appui pour la partie supérieure modulaire d'évier.
